Europäisches Patentamt

**European Patent Office**

Office européen des brevets

(11) Veröffentlichungsnummer: **0 300 977**
**A1**

(12) **EUROPÄISCHE PATENTANMELDUNG**

(21) Anmeldenummer: **88830227.0**

(22) Anmeldetag: **20.05.88**

(51) Int. Cl.⁴: **B 63 B 1/34**

(30) Priorität: **29.05.87 IT 4799787**

(43) Veröffentlichungstag der Anmeldung:
**25.01.89 Patentblatt 89/04**

(84) Benannte Vertragsstaaten:
**AT BE CH DE ES FR GB GR LI LU NL SE**

(71) Anmelder: **Puccioni, Ferdinando**
**Via Arrigo Boito, 73**
**I-00199 Roma (IT)**

(72) Erfinder: **Puccioni, Ferdinando**
**Via Arrigo Boito, 73**
**I-00199 Roma (IT)**

(74) Vertreter: **Sneider, Massimo**
**Studio Lenzi Via Lucania 13**
**I-00187 Roma (IT)**

Die Bezeichnung der Erfindung wurde geändert (Richtlinien für die Prüfung im EPA, A-III, 7.3).

(54) **Einrichtung zum Erhöhen der Geschwindigkeit von Wasserfahrzeugen durch Verminderung des Widerstandes gegen den Vorschub und sich daraus ergebende Wasserfahrzeuge.**

(57) Die Einrichtung, besteht aus vorzugsweise im lebenden Werk von Bug und/oder in der Nähe des Buges offenen Mündungen (1) für die Entnahme des vom Wasserfahrzeug während seines Vorschubes verdrängten Wassers und aus am Achterspiegel und in der Nähe der Schraube vorgesehenen Mündungen (3), wobei diese Öffnungen , bzw. diese Mündungen , untereinander mittels dichten Leitungen (4) verbunden sind . In jeder Leitung , welche die Einlassmündungen oder die Einlassöffnungen und jene des Auslasses untereinander verbindet , sind Saug- und Druckpumpen (5) installiert .

Die Erfindung bezieht sich auch auf Wasserfahrzeuge, welche die vorgenannte Einrichtung benützen .

FIG. 1

FIG. 2

EP 0 300 977 A1

## Beschreibung

**"Apparat zum Erhöhen der Geschwindigkeit von Wasserfahrzeugen durch Verminderung des Widerstandes gegen den Vorschub mittels Ansaugung des Wassers am Bug und Zurückstossung desselben am Heck, indem auch der Wellengang beseitigt wird, und sich daraus ergebende Wasserfahrzeuge."**

Es ist bekannt, dass die Wasserfahrzeuge jeglicher Art bei der Navigation seitwärts des Buges ein gewisses Wasservolumen verdrängen, welches hochgehoben und von neuen gegen den Wasserspiegel zurückgestossen wird, in dem geschifft wird.

Es ist gleichfalls bekannt, dass diese Bewegung des Wassers, welche einen Widerstand gegen die Vorwärtsbewegung, d.h. den Vorschub, des Wasserfahrzeuges darstellt, dazu neigt einen Wellengang zu bilden, welcher die Schiffahrt stört.

Man versuchte mehrmals den gegen den Vorschub vom Wasser entgegengesetzen Widerstand zu vermindern, indem besondere Profile der Kiele und der Bug- und Heckspiegel untersucht wurden, jedoch ohne besonders nennenswerte Ergebnisse, da der Schniffskörper auf dem Wasser notgedrungen schwimmen muss. Die Tragflächenboote und die Over-crafts haben eine gesonderte Verdrängungsart.

Der Gegenstand der vorliegenden Erfindung ist ein Apparat zum Vermindern sowohl des Widerstandes gegen den Vorschub der Wasserfahrzeuge als auch des dadurch entstehenden Wellenganges.

Die Erfinding bezieht sich auch auf jene Wasserfahrzeuge, welche sich aufgrund der Verwendung des vorgenannten Apparates ergeben.

Erfindungsgemäss sind vorzugsweise im lebenden Werk von Bug und/oder in der Nähe des Buges Öffnungen, bzw. Mündungen, ausgeführt, welche es gestatten den grössten Teil, wenn nicht die Gesamtheit des vom Wasserfahrzeug während dessen Vorschubes verdrängten Wassers (Kielwasserschaum) aufzunehmen. Dieses zweckdienlich einkanalisierte Wasser wird in Richtung des Hecks zu vorzugsweise am Achterspiegel und in der Nähe der Schraube vorgesehene Auslassöffnungen geleitet.

Gemäss einer bevorzugten Ausführungsform der Erfindung wird das Wasser von der Bugöffnung oder von den Bugöffnungen mittels Saugpumpen angesaugt und mittels Druckpumpen zum Heck zurückbefördert, wobei eine alleinige Saug- und Druckpumpe die beiden vorgenannten Funktionen erfüllen kann.

Bezugnehmend auf die anliegende Zeichnung wird die Erfindung beim Lesen der nachstehenden Beschreibung verständlicher sein. In der Zeichnung selbst zeigen:

Fig. 1 eine schematische Seitenansicht eines Wasserfahrzeuges;

Fig. 2 eine Ansicht im Grundriss desselben;

Fig. 3 immer schematisch eine Ansicht im Längsschnitt;

Figs. 4 und 5 mögliche Lagen der Ansaugöffnungen des Wassers am Bug, beziehungsweise der Ausstossöffnungen des Wassers am Heck.

Unter Bezugnahme auf die Zeichnung besteht der erfindungsgemässe Apparat zur Verminderung des Widerstandes gegen den Vorschub der Wasserfahrzeuge und des durch die Bewegung der Schraube hervorgerufenen Wellenganges im wesentlichen aus vorzugsweise am Bug und in der Nähe desselben gelegenen Öffnungen 1, mit denen das sich davorbefindliche Wasser, insbesondere das vom Wasserfahrzeug während dessen Vorschubes verdrängte Wasser, aufgenommen wird; dieses Wasser hochgehoben unter Bildung des Kielwasserschaumes bewirkt einen bemerkenswerten Widerstand gegen den Vorschub selbst und einen Wellengang.

Diese Öffnungen 1 sind vorzugsweise am Bug und seit wärts desselben gelegen, u.zw. auf einer Höhe ein wenig unterhalb der Wasserlinie 2.

In Übereinstimmung mit dem Auslauf der Welle der Schraube sind am Heck in entsprechender Weise Öffnungen 3 für den Auslass des am Bug vermittels der Öffnungen 1 aufgenommenen Wassers vorgesehen; diese Öffnungen haben eine ellipsenähliche Form mit lotrechtgerichtetem grösseren Durchmesser, derart, dass das von den vorderen Öffnungen angesaugte Wasser das der Welle gegenüberliegende geringere Wasservolumen auffüllt.

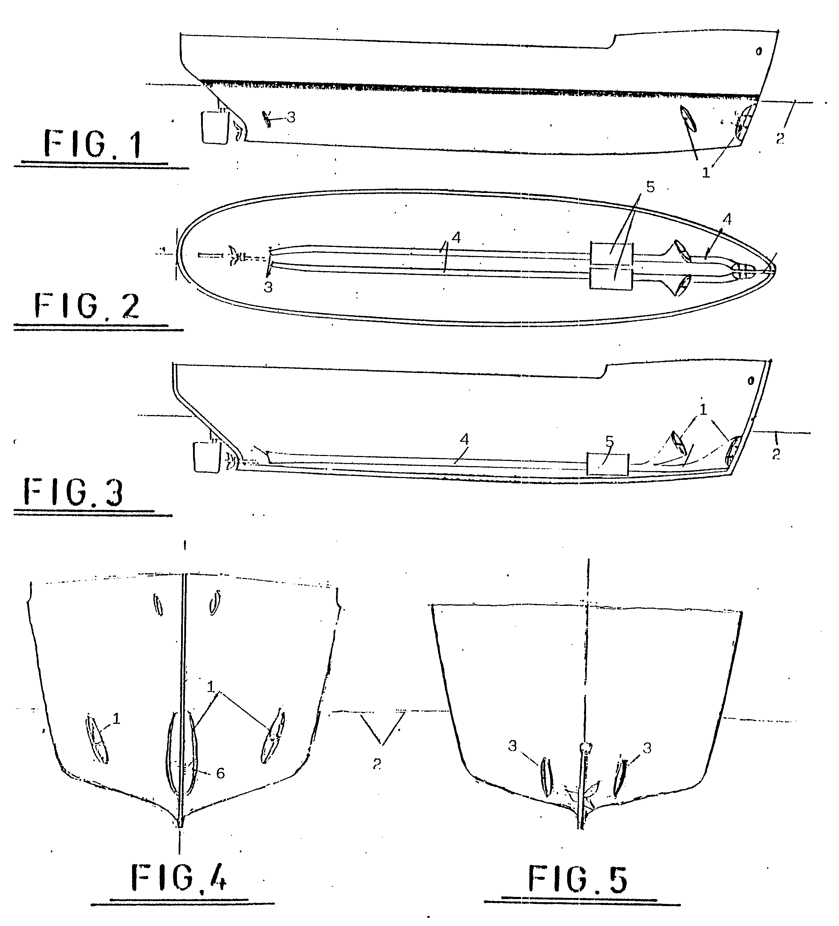

Wie man aus den Figuren 2 und 3 entnehmen kann, sind die Öffnungen 1 und die Öffnungen 3 im Inneren des Wasserfahrzeuges untereinander vermittels Leitungen geeigneten Durchmessers 4 verbunden, derart, dass das über die Öffnungen 1 verladene Wasser aus den Abgabeöffnungen 3 mühelos abflissen kann.

Bei einer Ausführungsform können diese Leitungen 4 auch nach Art eines Venturi-Rohrs fassoniert sein, derart um die Geschwindigkeit des Wassers am Auslauf zu erhöhen, indem der Navigation ein weiterer Schub erteilt wird.

Erfindungsgemäss sind in den Leitungen 4 Pumpen 5 zwischengeschaltet, welche bei der erläuterten Ausführungsform Saug- und Druckpumpen sind, aber die auch getrennt sein könnten, u.zw. eine Saugpumpe und eine Druckpumpe, dies um die Fördermenge der Pumpen selbst und somit die entnehmbare Wassermenge und den Druck des Wasser am Auslass zu erhöhen.

Zweckdienlich werden wenigsten die Eintrittsöffnungen 1 des Wassers mit Abdeckgittern 6 versehen sein um zu verhindern, dass Fremdkörper in die Leitungen gelangen können und diese dabei verstopfen und gegebenenfalls die Leitungen selbst und auch die Pumpen beschädigen.

Ein weiterer Gegenstand der Erfindung sind wie erwähnt auch die Wasserfahrzeuge, welche den vorstehend dargelegten erfinderischen Gedanken der Entnahme des Wassers in der Bugzone und des Rückflusses des Wassers selbst in die Heckzone des Wasserfahrzeuges anwenden.

Es ist zu betonen, dass die Entnahme- oder Eingansöffnungen des Wassers an diskreten Punkten des lebenden Werkes des Wasserfahrzeuges angeordnet sein werden , und dies in Funktion von der angewandten Rumpfart , u.zw. ob Verdrängungs- oder Gleitrumpf , und in Funktion vom gewünschten Dämpfungseffekt des Wellenganges . Im Falle der eingetauchten Wasserfahrzeuge , wie z.B. der Unterseeboote , ist die Wirkung des Apparates im wesentlichen eine Zunahme der Geschwindigkeit , bedingt durch die drastische Verminderung des Widerstandes gegen den Vorschub und den Reaktionsschub , welcher sich mit dem des normalen Antriebes addiert .

Der Apparat zum Verringern des Widerstandes gegen den Vorschub der Wasserfahrzeuge und des sich daraus ergebenden Wellenganges wurde vorstehend nur beispielsweise in nicht beschränkender Weise beschrieben und erläutert . Derselbe könnte in naheliegender Weise alle jene Varianten baulicher Ordnung erfahren , welche von der Technik und der praktischen Verwirklichung empfohlen werden könnten ohne damit vom Bereich der Erfindung abzuweichen , wie diese in den nachstehenden Patentansprüchen zum Vorschein kommt .

**Patentansprüche**

1.) Apparat zum Verringern des Widerstandes gegen den Vorschub der Wasserfahrzeuge und des sich daraus ergebenden Wellenganges , dadurch gekennzeichnet , dass dieser besteht aus vorzugsweise im lebenden Werk von Bug und/oder in der Nähe desselben ausgeführten Öffnungen (1) zur aufnahme des vom Wasserfahrzeug während dessen Vorschubes verdrängten Wassers und aus am Achterspiegel und in der Nähe der Schraube vorgesehenen Öffnungen (3) für den Abfluss des aufgenommenen Wassers , wobei diese Öffnungen (1),(3) untereinander mittels dichten Leitungen (4) verbunden sind.

2.) Apparat zum Verringern des Widerstandes gegen den Vorschub der Wasserfahrzeuge und des sich daraus ergebenden Wellenganges , nach Anspruch 1 , dadurch gekennzeichnet , dass in jeder Leitung (4) , welche die Einlassöffnungen (1) und die Auslassöffnungen (3) untereinander verbindet , Saug- und Druckpumpen oder getrennte Saugpumpen und Druckpumpen (4) installiert sind.

3.) Apparat zum Verringern des Widerstandes gegen den Vorschub der Wasserfahrzeuge und des von der Schraube erzeugten Wellenganges , nach Anspruch 1 und/oder 2 , dadurch gekennzeichnet , jede Leitung (4) , welche die Bugöffnungen mit jenen des Hecks untereinander verbindet , nach Art eines Venturi-Rohrs fassoniert ist , derart um die Austrittsgeschwindigkeit des Wassers zu erhöhen .

4.) Apparat zum Verringern des Widerstandes gegen den Vorschub der Wasserfahrzeuge und des sich daraus ergebenden Wellenganges , nach Anspruch 1 , dadurch gekennzeichnet , dass wenigstens die Eintrittsöffnungen des Wassers mit Mitteln versehen sind , welche den Eintritt von Fremdkörpern in den Apparat verhindern .

5.) Apparat zum Verringern des Widerstandes gegen den Vorschub der Wasserfahrzeuge und des sich daraus ergebenden Wellenganges , dadurch gekennzeichnet , dass wenigstens die Auslässöffnungen eine ellipsenähnliche Form mit lotrechtgerichtetem Grösseren Durchmesser haben .

6.) Wasserfahrzeuge bei denen der Apparat installiert ist , wie dieser in einem oder mehreren der Ansprüche 1 bis 5 beansprucht wurde .

0300977

FIG.1

FIG.2

FIG.3

FIG.4

FIG.5

**Europäisches Patentamt**

# EUROPÄISCHER RECHERCHENBERICHT

Nummer der Anmeldung

## EINSCHLÄGIGE DOKUMENTE

EP 88830227.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE - C - 959 708 (NEUKAMM) | 1,6 | B 63 B 1/34 |
| Y | * Gesamt * | 2 | |
| | -- | | |
| X | FR - A - 431 795 (ULLMANN) | 1,6 | |
| | * Fig. * | | |
| | -- | | |
| A | DE - A1 - 2 707 631 (MÜLLER) | 1,5,6 | |
| | * Gesamt * | | |
| | -- | | |
| Y | DE - A1 - 3 120 670 (SCHWADERLAPP) | 2 | |
| A | * Zusammenfassung; Fig. * | 6 | |
| | -- | | |
| A | DE - A1 - 3 234 954 (BAUM) | 3,6 | |
| | * Zusammenfassung * | | RECHERCHIERTE SACHGEBIETE (Int. Cl.4) |
| | -- | | |
| A | DE - A1 - 3 125 887 (MESSERSCHMITT) | 1,2,6 | B 63 B |
| | * Seite 7 * | | B 63 H |
| | ---- | | |

Der vorliegende Recherchenbericht wurde für alle Patentansprüche erstellt.

| Recherchenort | Abschlußdatum der Recherche | Prüfer |
|---|---|---|
| WIEN | 06-09-1988 | KREHAN |